(19)

Europäisches
Patentamt
European
Patent Office
Office européen
des brevets

(11) **EP 3 051 825 A1**

(12) **EUROPEAN PATENT APPLICATION**

(43) Date of publication:
**03.08.2016 Bulletin 2016/31**

(51) Int Cl.:
**H04N 19/98** (2014.01)  **H04N 19/36** (2014.01)
**H04N 19/117** (2014.01)  **H04N 19/136** (2014.01)
**H04N 19/186** (2014.01)  **H04N 19/80** (2014.01)

(21) Application number: **15305119.8**

(22) Date of filing: **30.01.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Lasserre, Sébastien
35576 CESSON-SEVIGNE (FR)**

• **Le Leannec, Fabrice
35576 CESSON-SEVIGNE (FR)**
• **Bordes, Philippe
35576 CESSON-SEVIGNE (FR)**

(74) Representative: **Huchet, Anne
Technicolor
1, rue Jeanne d'Arc
92443 Issy-les-Moulineaux Cedex (FR)**

(54) **A method and apparatus of encoding and decoding a color picture**

(57)   The present disclosure generally relates to a method and device of encoding a color picture having color components (Ec), characterized in that it comprises:

- obtaining (130) a luminance component (L) by applying a non-linear function, that depends on a modulation value obtained from the luminance (Y) of the color picture, on the luminance (Y) of the color picture, in order that the dynamic of said luminance component (L) is reduced compared to the dynamic of the luminance (Y) of the color picture;

- obtaining two chrominance components (C1, C2) by:
- obtaining (150) at least one intermediate color component (E'c) by scaling each color component (Ec) by a factor (r(L)) that depends on the luminance component (L); and
- obtaining (170) said two chrominance components (C1, C2) from said at least one intermediate color components (E'c); and

- encoding (180) said luminance (L) and two chrominance components (C1, C2).

**Fig. 1**

EP 3 051 825 A1

**Description**

**2. Field.**

The present disclosure generally relates to picture/video encoding and decoding. Particularly, but not exclusively, the technical field of the present disclosure is related to encoding/decoding of a picture whose pixels values belong to a high-dynamic range.

**3. Background.**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

In the following, a color picture contains several arrays of samples (pixel values) in a specific picture/video format which specifies all information relative to the pixel values of a picture (or a video) and all information which may be used by a display and/or any other device to visualize and/or decode a picture (or video) for example. A color picture comprises at least one component, in the shape of a first array of samples, usually a luma (or luminance) component, and at least one another component, in the shape of at least one other array of samples. Or, equivalently, the same information may also be represented by a set of arrays of color samples (color component), such as the traditional tri-chromatic RGB representation.

A pixel value is represented by a vector of **C** values, where **c** is the number of components. Each value of a vector is represented with a number of bits which defines a maximal dynamic range of the pixel values.

Standard-Dynamic-Range pictures (SDR pictures) are color pictures whose luminance values are represented with a limited dynamic usually measured in power of two or f-stops. SDR pictures have a dynamic around 10 fstops, i.e. a ratio 1000 between the brightest pixels and the darkest pixels in the linear domain, and are coded with a limited number of bits (most often 8 or 10 in HDTV (High Definition Television systems) and UHDTV (Ultra-High Definition Television systems) in a non-linear domain, for instance by using the ITU-R BT.709 OEFT (Optico-Electrical-Transfer-Function) (Rec. ITU-R BT.709-5, April 2002) or ITU-R BT.2020 OETF (Rec. ITU-R BT.2020-1, June 2014) to reduce the dynamic. This limited non-linear representation does not allow correct rendering of small signal variations, in particular in dark and bright luminance ranges. In High-Dynamic-Range pictures (HDR pictures), the signal dynamic is much higher (up to 20 f-stops, a ratio one million between the brightest pixels and the darkest pixels) and a new non-linear representation is needed in order to maintain a high accuracy of the signal over its entire range. In HDR pictures, raw data are usually represented in floating-point format (either 32-bit or 16-bit for each component, namely float or half-float), the most popular format being openEXR half-float format (16-bit per RGB component, i.e. 48 bits per pixel) or in integers with a long representation, typically at least 16 bits.

A color gamut is a certain complete set of colors. The most common usage refers to a set of colors which can be accurately represented in a given circumstance, such as within a given color space or by a certain output device.

A color volume is defined by a color space and a dynamic range of the values represented in said color space.

For example, a color gamut is defined by a RGB ITU-R Recommendation BT.2020 color space for UHDTV. An older standard, ITU-R Recommendation BT.709, defines a smaller color gamut for HDTV. In SDR, the dynamic range is defined officially up to 100 nits (candela per square meter) for the color volume in which data are coded, although some display technologies may show brighter pixels.

High Dynamic Range pictures (HDR pictures) are color pictures whose luminance values are represented with a HDR dynamic that is higher than the dynamic of a SDR picture.

The HDR dynamic is not yet defined by a standard but one may expect a dynamic range up to a few thousands nits. For instance, a HDR color volume is defined by a RGB BT.2020 color space and the values represented in said RGB color space belong to a dynamic range from 0 to 4000 nits. Another example of HDR color volume is defined by a RGB BT.2020 color space and the values represented in said RGB color space belong to a dynamic range from 0 to 1000 nits.

Color-grading a picture (or a video) is a process of altering/enhancing the colors of the picture (or the video). Usually, color-grading a picture involves a change of the color volume (color space and/or dynamic range) or a change of the color gamut relative to this picture. Thus, two different color-graded versions of a same picture are versions of this picture whose values are represented in different color volumes (or color gamut) or versions of the picture whose at least one of their colors has been altered/enhanced according to different color grades. This may involve user interactions.

For example, in cinematographic production, a picture and a video are captured using tri-chromatic cameras into RGB color values composed of 3 components (Red, Green and Blue). The RGB color values depend on the tri-chromatic characteristics (color primaries) of the sensor. A first color-graded version of the captured picture is then obtained in order to get theatrical renders (using a specific theatrical grade). Typically, the values of the first color-graded version of the captured picture are represented according to a standardized YUV format such as BT.2020 which defines parameter values for UHDTV.

Then, a Colorist, usually in conjunction with a Director of Photography, performs a control on the color values of the first color-graded version of the captured picture by fine-tuning/tweaking some color values in order to instill an artistic intent.

The problem to be solved is the distribution of a compressed HDR picture (or video) while, at the same time, distributing an associated SDR picture (or video) representative of a color-graded version of said HDR picture (or video).

A trivial solution is simulcasting both SDR and HDR picture (or video) on a distribution infrastructure but the drawback is to virtually double the needed bandwidth compared to a legacy infrastructure distributing adapted to broadcast SDR picture (or video) such as HEVC main 10 profile ("High Efficiency Video Coding", SERIES H: AUDIOVISUAL AND MULTIMEDIA SYSTEMS, Recommendation ITU-T H.265, Telecommunication Standardization Sector of ITU, April 2013).

Using a legacy distribution infrastructure is a requirement to accelerate the emergence of the distribution of HDR pictures (or video). Also, the bitrate shall be minimized while ensuring good quality of both SDR and HDR version of the picture (or video).

Moreover, backward compatibility may be ensured, i.e. the SDR picture (or video) shall be viewable for users equipped with legacy decoder and display, i.e. in particular, overall perceived brightness (i.e. dark vs. bright scenes) and perceived colors (for instance, preservation of hues, etc.) should be preserved.

Another straightforward solution is to reduce the dynamic range of the HDR picture (or video) by a suitable non-linear function, typically into a limited number of bits (say 10 bits), and directly compressed by the HEVC main10 profile. Such non-linear function (curve) already exist like the so-called PQ EOTF proposed by Dolby at SMPTE ((SMPTE standard: High Dynamic Range Electro-Optical Transfer Function of Mastering Reference Displays, SMPTE ST 2084:2014).

The drawback of this solution is the lack of backward compatibility, i.e. the obtained reduced version of the picture (video) has not a sufficient visual quality to be considered as being viewable as a SDR picture (or video), and compression performance are somewhat poor.

The present disclosure has been devised with the foregoing in mind.

## 4. Summary.

The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

The disclosure sets out to remedy at least one of the drawbacks of the prior art with a method of encoding a color picture having color components, characterized in that it comprises:

- obtaining a luminance component by applying a non-linear function, that depends on a modulation value obtained from the luminance of the color picture, on the luminance of the color picture, in order that the dynamic of said luminance component is reduced compared to the dynamic of the luminance of the color picture;
- obtaining two chrominance components by:

    - obtaining at least one intermediate color component by scaling each color component by a factor that depends on the luminance component; and
    - obtaining said two chrominance components from said at least one intermediate color components; and

- encoding said luminance and two chrominance components.

The method allows to get a SDR color picture from the color picture to be encoded by combining together the decoded luminance and chrominance components. This SDR color picture may be displayed by a legacy SDR display. In other terms, such a SDR color picture is viewable by an end-user from his legacy SDR display. The method allows thus backward compatibility with any SDR legacy display.

According to an embodiment, obtaining said two chrominance components from said at least one intermediate color components comprises:

- obtaining three intermediate components by taking the square-root of each intermediate color component; and
- linearly combining together the three intermediate components.

The square root function is used to approximate an OEFT (Optico-Electrical-Transfer-Function) required at the encoding side. Such an approximation leads non-ambiguous invertible formulas and to a low complexity decoder partly because the EOTF (Electro-Optical-Transfer-Function), that shall be applied at the decoder side to decode the full dynamic input picture, is then a square function.

Also, the SDR picture shows somewhat consistent colors because the square root is a good approximation of the standard SDR OETF defined by the ITU-R Recommendation BT.709/BT.2020, used in HD/UHD TV, which is mainly a power 0.45.

According to another of its aspect, the present disclosure relates to a method of decoding a color picture from a bitstream. The method comprises:

- obtaining a first component by applying a non-linear function on a luminance component, obtained from the bitstream, in order that the dynamic of said first component is increased compared to the dynamic of the luminance component;
- obtaining at least one color component from said first component, two chrominance component obtained from the bitstream and from a factor that depends on the luminance component; and
- forming a decoded picture by combining together said at least one color component.

According to other of its aspects, the disclosure relates to devices comprising a processor configured to implement the above methods, a computer program product comprising program code instructions to execute the steps of the above methods when this program is executed on a computer, a processor readable medium having stored therein instructions for causing a processor to perform at least the steps of the above methods, and a non-transitory storage medium carrying instructions of program code for executing steps of the above methods when said program is executed on a computing device.

The specific nature of the disclosure as well as other objects, advantages, features and uses of the disclosure will become evident from the following description of embodiments taken in conjunction with the accompanying drawings.

## 5. Brief Description of Drawings.

In the drawings, an embodiment of the present disclosure is illustrated. It shows:

- **Fig. 1** shows schematically a diagram of the steps of a method of encoding a color picture in accordance with an embodiment of the disclosure;
- **Fig. 2** shows schematically a diagram of the sub-steps of the step 170 in accordance with an embodiment of the disclosure;
- **Fig. 3** shows schematically a diagram of the sub-steps of the step 170 in accordance with an embodiment of the disclosure;
- **Fig. 4** shows schematically a diagram of the steps of a method of decoding a color picture from at least one bitstream in accordance with an embodiment of the disclosure;
- **Fig. 4a** shows schematically a diagram of the sub-steps of the step 230 in accordance with an embodiment of the disclosure;
- **Fig. 4b** shows schematically a diagram of the sub-steps of the step 230 in accordance with an embodiment of the disclosure;
- **Fig. 5** shows schematically a diagram of the sub-steps of the step 231 in accordance with an embodiment of the disclosure;
- **Fig. 6** shows an example of an architecture of a device in accordance with an embodiment of the disclosure; and
- **Fig. 7** shows two remote devices communicating over a communication network in accordance with an embodiment of the disclosure.

Similar or same elements are referenced with the same reference numbers.

## 6. Description of Embodiments.

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

In an embodiment, a factor depends on a modulation value Ba. A modulation (or backlight) value is usually associated with an HDR picture and is representative of the brightness of the HDR picture. Here, the term (modulation) backlight is used by analogy with TV sets made of a color panel, like a LCD panel for instance, and a rear illumination apparatus, like a LED array for instance. The rear apparatus, usually generating white light, is used to illuminate the color panel to provide more brightness to the TV. As a consequence, the luminance of the TV is the product of the luminance of rear illuminator and of the luminance of the color panel. This rear illuminator is often called "modulation" or "backlight" and its intensity is somewhat representative of the brightness of the overall scene.

The disclosure is described for encoding/decoding a color picture but extends to the encoding/decoding of a sequence of pictures (video) because each color picture of the sequence is sequentially encoded/decoded as described below.

In the following, the color picture I is considered as having three color components Ec (c=1, 2 or 3) in which the pixel values of the color picture I are represented.

The present disclosure is not limited to any color space in which the three components Ec are represented but extends to any color space such as RGB, CIELUV, XYZ, CIELab, etc.

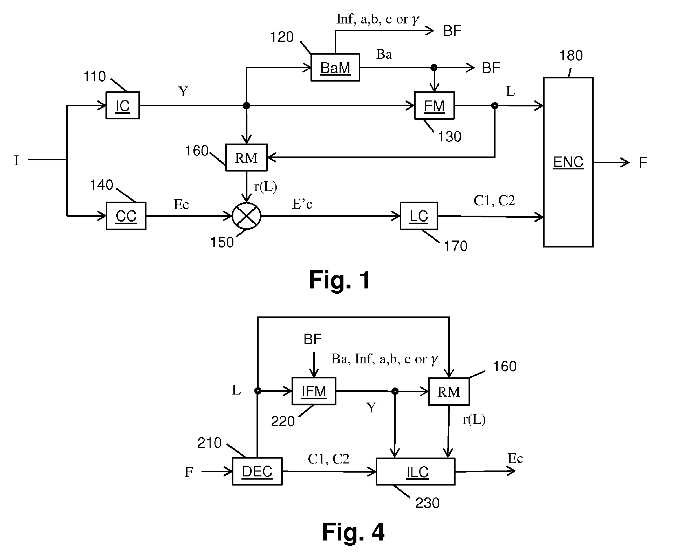

**Fig. 1** shows schematically a diagram of the steps of a method of encoding the color picture I in accordance with an embodiment of the disclosure.

Basically, the method determines (and encodes) a luminance component L and two chrominance components C1 and C2 from the three color components Ec of the color picture I to be encoded. The luminance and chrominance components form a SDR color picture whose pixel values are represented in the color space (L, C1, C2). Said SDR color picture is viewable by a legacy SDR display, i.e. has a sufficient visual quality in order to be viewed by a legacy SDR display.

In step 110, a module IC obtains a component Y that represents the luminance of the color picture I by linearly combining together the three components Ec:

$$Y = A_1 \begin{bmatrix} E_1 \\ E_2 \\ E_3 \end{bmatrix}$$

where A1 is the first row of a 3x3 matrix A that defines a color space transforms from the (E1, E2, E3) color space to a color space (Y, C1, C2).

In step 130, a module FM obtains the luminance component L by applying a non-linear function **f** on the component Y:

$$L = f(Ba, Y) \qquad (1)$$

where Ba is a modulation value obtained from the component Y by the module BaM (step 120).

Applying the non-linear function **f** on the component Y reduces its dynamic range. In other terms, the dynamic of the luminance component L is reduced compared to the dynamic of the component Y.

Basically the dynamic range of the component Y is reduced in order that the luminance values of the component L are represented by using 10 bits.

According to an embodiment, the component Y is divided by the modulation value Ba before applying the non-linear function **f:**

$$L = f(Y/Ba) \qquad (2)$$

According to an embodiment, the non-linear function **f** is a gamma function:

$$L = B.Y_1^{\gamma}$$

where $Y_1$ equals either Y or Y/Ba according to the embodiments of eq. (1) or (2), B is a constant value, $\gamma$ is a parameter (real value strictly below 1).

According to an embodiment, the non-linear function **f** is a S-Log function:

$$L = a.\ln(Y_1 + b) + c$$

where **a, b** and **c** are parameters (real values) of a SLog curve determined such that f(0) and f(1) are invariant, and the derivative of the SLog curve is continuous in 1 when prolonged by a gamma curve below 1. Thus, **a, b** and **c** are functions of the parameter $\gamma$. Typical values are shown in Table 1.

**Table 1**

| Y | a | b | c |
|---|---|---|---|
| 1/2.0 | 0.6275 | 0.2550 | 0.8575 |
| 1/2.4 | 0.4742 | 0.1382 | 0.9386 |
| 1/2.8 | 0.3861 | 0.0811 | 0.9699 |

In an advantageous embodiment, a value of $\gamma$ close to 1/2.5 is efficient in terms of HDR compression performance as well as good viewability of the obtained SDR luma. Thus, the 3 parameters may advantageously take the following values: a = 0.44955114, b = 0.12123691, c = 0.94855684.

According to an embodiment, the non-linear function **f** is either a gamma correction or a SLog correction according to the pixel values of the component Y.

Applying a gamma correction on the component Y, pulls up the dark regions but does not lower enough high lights to avoid burning of bright pixels.

Then, according to an embodiment, the module FM applies either the gamma correction or the SLog correction according to the pixel values of the component Y. An information data **Inf** may indicate whether either the gamma correction or Slog correction applies.

For example, when the pixel value of the component Y is below a threshold (equal to 1), then the gamma correction is applied and otherwise the SLog correction is applied.

According to an embodiment of the step 120, the modulation value Ba is an average, median, min or max value of the pixel values of the component Y. These operations may be performed in the linear HDR luminance domain $Y_{lin}$ or in a non-linear domain like ln(Y) or $Y^\gamma$ with $\gamma<1$.

According to an embodiment, when the method is used to encode several color pictures belonging to a sequence of pictures, a modulation value Ba is determined for each color picture, a Group of Pictures (GOP) or for a part of a color picture such as, but not limited to, a slice or a Transfer Unit as defined in HEVC.

According to an embodiment, the value Ba and/or the parameters of the non-linear function **f** (such as **a, b, c** or $\gamma$) and/or the information data **Inf** is (are) stored in a local or remote memory and/or added into a bitstream BF as illustrated in **Fig. 1.**

In step 140, at least one color component EC (c=1, 2, 3) is obtained from the color picture I. A color component Ec may be obtained directly from a local or a remote memory or by applying a color transform on the color picture I.

In step 150, an intermediate color component E'c (c=1, 2 or 3) is obtained by scaling each color component Ec by a factor r(L) that depends on the luminance component L:

$$\begin{cases} E'_1(i) = E_1(i) * r(L(i)) \\ E'_2(i) = E_2(i) * r(L(i)) \\ E'_3(i) = E_3(i) * r(L(i)) \end{cases}$$

where $r(L(i))$ is a factor (real value), determined by the module RM (step 160), that depends on the value of a pixel **i** of the component L, $E'_c(i)$ is the value of the pixel **i** of the intermediate color component E'c, and $E_c(i)$ is the value of the pixel **i** of the color component Ec.

Scaling by a factor means multiplying by said factor or dividing by the inverse of said factor.

Scaling each color component Ec by the factor r(L) that depends on the luminance component L preserves the hue of the colors of the color picture I.

According to an embodiment of the step 160, the factor r(L) is the ratio of the luminance component L over the component Y:

$$r(L(i)) = \frac{L(i)}{Y(i)}$$

with Y(i) being the value of a pixel i of the component Y. Actually, the value Y(i) of a pixel of the component Y depends non-ambiguously on the value L(i) of a pixel of the luminance component L, such that the ratio can be written as a function of L(i) only.

This embodiment is advantageous because scaling each color component Ec by the factor r(L) that further depends on the component Y preserves the hue of the colors of the color picture I and thus improves the visual quality of the decoded color picture.

More precisely, in colorimetry and color theory, colorfulness, chroma, and saturation refer to the perceived intensity of a specific color. Colorfulness is the degree of difference between a color and gray. Chroma is the colorfulness relative to the brightness of another color that appears white under similar viewing conditions. Saturation is the colorfulness of a color relative to its own brightness.

A highly colorful stimulus is vivid and intense, while a less colorful stimulus appears more muted, closer to gray. With no colorfulness at all, a color is a "neutral" gray (a picture with no colorfulness in any of its colors is called grayscale). Any color can be described from its colorfulness (or chroma or saturation), lightness (or brightness), and hue.

The definition of the hue and saturation of the color depends on the color space used to represent said color.

For example, when a CIELUV color space is used, the saturation $s_{uv}$ is defined as the ratio between the chroma $C^*_{uv}$ over the luminance $L^*$.

$$s_{uv} = \frac{C_{uv}^*}{L^*} = \frac{\sqrt{u^{*2} + v^{*2}}}{L^*}$$

The hue is then given by

$$h_{uv} = arctan\frac{v^*}{u^*}$$

According to another example, when a CIELAB color space is used, the saturation is defined as the ratio of the chroma over the luminance:

$$s_{ab} = \frac{C_{ab}^*}{L^*} = \frac{\sqrt{a^{*2} + b^{*2}}}{L^*}$$

The hue is then given by

$$h_{ab} = arctan\frac{b^*}{a^*}$$

These equations are a reasonable predictor of saturation and hue that are in agreement with the human perception of saturation, and demonstrate that adjusting the brightness in CIELAB (or CIELUV) color space while holding the angle $a^*/b^*$ (or $u^*/v^*$) fixed does affect the hue and thus the perception of a same color. In step 150, scaling the color components Ec by a same factor preserves this angle, thus the hue.

Now let us consider that the color picture I is represented in the CIELUV color space and a picture I2 that is formed by combining together the luminance component L, whose dynamic range is reduced compared to the dynamic range of the luminance of the color picture I (step 130), and two chrominance components U (=C1) and V (=C2) of the CIELUV color space. The colors of the picture I2 are thus differently perceived by a human being because the saturation and the hue of the colors changed. The method (step 150) determines the chrominance components C1 and C2 of the picture I2 in order that the hue of the colors of the picture I2 best match the hue of the colors of the color picture I.

According to an embodiment of the step 160, the factor r(L) is given by:

$$r(L(i)) = \frac{max\{5, L(i)\}}{2048max\{0.01, Y(i)\}}$$

This last embodiment is advantageous because it prevents the factor from going to zero for very dark pixels, i.e. allows the ratio to be invertible regardless of the pixel value.

In step 170, the two chrominance components C1, C2 are obtained from said at least one intermediate color components E'c.

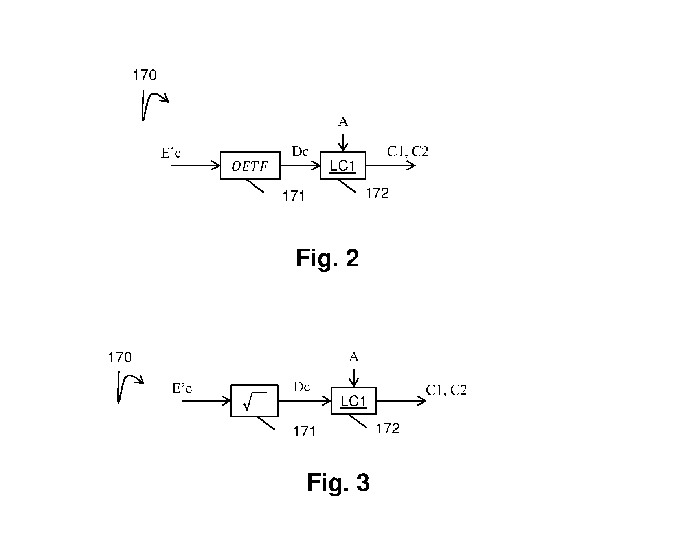

According to an embodiment of the step 170, illustrated in **Fig. 2,** at least one intermediate component Dc (c=1, 2 or 3) is obtained by applying (step 171) an OETF on each intermediate color component (E'c):

$$\begin{cases} D_1 = \text{OETF} \ (E_1') \\ D_2 = \text{OETF} \ (E_2') \\ D_3 = \text{OETF} \ (E_3') \end{cases}$$

For example, the OETF is defined by the ITU-R recommendation BT.709 or BT.2020 and stated as follows

$$D_c = \text{OETF} \ (E_c') = \begin{cases} 4.5E_c' & E_c' < 0.018 \\ 1.099E_c'^{0.45} - 0.099 & E_c' \geq 0.018 \end{cases}.$$

This embodiment allows a reduction of the dynamic range according to a specific OETF but leads to a complex decoding process as detailed later.

According to a variant of this embodiment, illustrated in **Fig. 3,** the OETF is approximated by a square root, i.e. at least one intermediate component Dc (c=1, 2 or 3) is obtained by taking the square-root (step 171) of each intermediate color component (E'c):

$$\begin{cases} D_1 = \sqrt{E_1'} \\ D_2 = \sqrt{E_2'} \\ D_3 = \sqrt{E_3'} \end{cases}$$

This embodiment is advantageous because it provides a good approximation of the OETF defined by the ITU-R recommendation BT.709 or BT.2020 and leads to a low complexity decoder.

According to another variant of this embodiment, the OETF is approximated by a cubic-root, i.e. at least one intermediate component Dc (c=1, 2 or 3) is obtained by taking the cubic-root (step 171) of each intermediate color component (E'c):

$$\begin{cases} D_1 = \sqrt[3]{E_1'} \\ D_2 = \sqrt[3]{E_2'} \\ D_3 = \sqrt[3]{E_3'} \end{cases},$$

This embodiment is advantageous because it provides a good approximation of the OETF defined by the ITU-R recommendation BT.709 or BT.2020 but it leads to a somewhat more complex decoder than the decoder obtains when the OETF is approximated by a square-root.

In step 172, a module LC1 obtains the two chrominance components C1 and C2 by linearly combining the three intermediate components Dc:

$$\begin{bmatrix} C_1 \\ C_2 \end{bmatrix} = \begin{bmatrix} A_2 \\ A_3 \end{bmatrix} \begin{bmatrix} D_1 \\ D_2 \\ D_3 \end{bmatrix}$$

where A2 and A3 are the second and third rows of the 3x3 matrix A.

In step 180 in **Fig. 1,** an encoder ENC encodes the luminance component L and the two chrominance components C1 and C2.

According to an embodiment, the encoded component L and chrominance components C1, C2 are stored in a local or remote memory and/or added into a bitstream F.

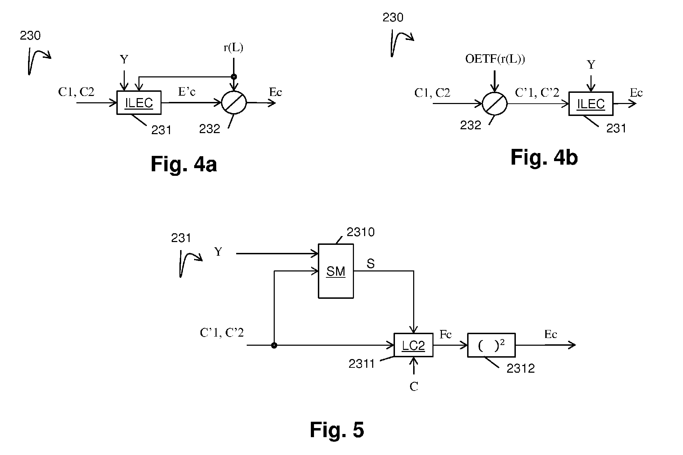

**Fig. 4** shows schematically a diagram of the steps of a method of decoding a color picture from at least a bitstream in accordance with an embodiment of the disclosure.

In step 210, a decoder DEC obtains a luminance component L and two chrominance components C1, C2 by decoding at least partially a bitstream F.

In step 220, a module IFM obtains a first component Y by applying a non-linear function **f⁻¹** on the luminance component L in order that the dynamic of the first component Y is increased compared to the dynamic of the luminance component L:

$$Y = f^{-1}(\mathrm{Ba}, \mathrm{L}) \qquad (3)$$

The non-linear function **f⁻¹** is the inverse of the non-linear function **f** (step 130).

Thus, the embodiments of the function **f⁻¹** are defined according to the embodiments of the function **f.**

According to an embodiment, the value Ba and/or the parameters of the non-linear function **f⁻¹** (such as **a, b, c or** γ) and/or the information data **Inf** is (are) obtained from a local or remote memory (for example a Look-Up-Table) and/or from a bitstream BF as illustrated in **Fig. 4.**

According to an embodiment, the luminance component L is multiplied by the modulation value Ba after having applied the non-linear function **f$^{-1}$**:

$$Y = Ba * f^{-1}(L) \quad (4)$$

According to an embodiment, the non-linear function **f$^{-1}$** is the inverse of a gamma function.

The component Y is then given by:

$$Y_1 = \frac{L^{1/\gamma}}{B}$$

where $Y_1$ equals Y or Y/Ba according to the embodiments of eq. (3) or (4), B is a constant value, $\gamma$ is a parameter (real value strictly below 1).

According to an embodiment, the non-linear function **f$^{-1}$** is the inverse of a S-Log function. The component $Y_1$ is then given by:

$$Y_1 = exp^{\left(\frac{L-c}{a}\right)} - b$$

According to an embodiment, the non-linear function **f** is the inverse of either a gamma correction or a SLog correction according to the pixel values of the component Y. This is indicated by the information data **Inf.**

In step 230, a module ILC obtains at least one color component Ec from the first component Y, the two chrominance component C1, C2, and from a factor r(L) that depends on the luminance component L. The decoded color picture is then obtained by combining together said at least one color component Ec.

The factor r(L) may be obtained either from a local or remote memory (such a Look-Up-Table) or from a bitstream BF or F.

When a general OETF is applied on each intermediate color component E'c (step 171 in **Fig. 2**), the intermediate components Dc are related to the component Y, the two chrominance components C1, C2 and the factor r(L):

$$Y = A_1 \begin{bmatrix} E_1 \\ E_2 \\ E_3 \end{bmatrix} = A_1 \begin{bmatrix} E'_1 \\ E'_2 \\ E'_3 \end{bmatrix} / r(L) = A_1 \begin{bmatrix} \text{EOTF}(D_1) \\ \text{EOTF}(D_2) \\ \text{EOTF}(D_3) \end{bmatrix} / r(L) \quad (5a)$$

and

$$\begin{bmatrix} C_1 \\ C_2 \end{bmatrix} = \begin{bmatrix} A_2 \\ A_3 \end{bmatrix} \begin{bmatrix} D_1 \\ D_2 \\ D_3 \end{bmatrix} \quad (5b)$$

where EOTF (Electro-Optical Trans Function) is the inverse of OETF applied in step 171.

Equation (5b) provides

$$\begin{cases} D_2 = \vartheta_2 D_1 + L_2(C_1, C_2) \\ D_3 = \vartheta_3 D_1 + L_3(C_1, C_2) \end{cases} \quad (6)$$

where OETF($E_c$) = $D_c$, $\vartheta_i$ are constants depending on the matrix A and $L_i$ are linear functions also depending on the matrix A. Then, equation (5a) becomes:

$$r(L) * Y = A_{11}\text{EOTF}(D_1) + A_{12}\text{EOTF}(D_2) + A_{13}\text{EOTF}(D_3) \quad (7)$$

and then

$$r(L) * Y = A_{11}\text{EOTF}(D_1) + A_{12}\text{EOTF}(\vartheta_2 D_1 + L_2(C_1, C_2)) + A_{13}\text{EOTF}(\vartheta_3 D_1 + L_3(C_1, C_2)) \quad (8)$$

Equation (8) is an implicit equation on $D_1$ only. Depending on the expression of the EOTF, equation (8) can be more or less solved simply. Once solved, $D_1$ is obtained, $D_2, D_3$ are deduced from $D_1$ by equation (6). Then the intermediate color component E'c are obtained by applying the EOTF on the three obtained intermediate components Dc, i.e. E'c = EOTF(Dc).

In this general case, i.e. when a general OETF (does not have any specific property) is applied on each intermediate color component E'c, there exist no analytic solution to equation (8). For instance when the OETF is the ITU-R BT.709/2020 OETF, the equation (8) may be solved numerically by using the so-called Newton's method or any other numerical method to find the root of a regular function. However, this leads to highly complex decoders.

In this general case, according to a first embodiment of the step 230, illustrated in **Fig. 4a,** in step 231, a module ILEC obtains three intermediate color component E'c from the first component Y, the two chrominance component C1, C2 and the factor r(L) as above explained. In step 232, the three color components Ec are obtained by scaling each intermediate color component E'c by the factor r(L):

$$Ec(i) = E'c(i)/r(L(i))$$

where $r(L(i))$ is the factor given by step 160 that depends on the value of a pixel **i** of the component L (output of step 210), $E'_c(i)$ is the value of the pixel **i** of an intermediate color component E'c, and $E_c(i)$ is the value of the pixel **i** of the color component Ec.

Actually this order step 231 before step 232 is the inverse of the order step 150 followed by step 170 of the encoding method.

According to a variant of this first embodiment, the OEFT is a square root function and the EOTF is then a square function.

According to another variant of this first embodiment, the OEFT is either a cubic root function and the EOTF is then a cubic function.

When the OETF used in step 171, fulfills the commutation condition, namely

$$\text{OETF}(x*y) = \text{OETF}(x) * \text{OETF}(y),$$

the component Y and the color components Ec are related by:

$$Y = A_1 \begin{bmatrix} E_1 \\ E_2 \\ E_3 \end{bmatrix} = A_1 \begin{bmatrix} \text{EOTF}(F_1) \\ \text{EOTF}(F_2) \\ \text{EOTF}(F_3) \end{bmatrix} \quad (9)$$

where Fc are components equal to OETF(Ec) and

$$\begin{bmatrix} C'_1 \\ C'_2 \end{bmatrix} = \begin{bmatrix} C_1 \\ C_2 \end{bmatrix} / \text{OETF}(r(L)) = \begin{bmatrix} A_2 \\ A_3 \end{bmatrix} \begin{bmatrix} D_1 \\ D_2 \\ D_3 \end{bmatrix} / \text{OETF}(r(L))$$

$$= \begin{bmatrix} A_2 \\ A_3 \end{bmatrix} \begin{bmatrix} \text{OETF}(E'_1) \\ \text{OETF}(E'_2) \\ \text{OETF}(E'_3) \end{bmatrix} / \text{OETF}(r(L)),$$

such that the commutation condition provides

$$\begin{bmatrix} C'_1 \\ C'_2 \end{bmatrix} = \begin{bmatrix} A_2 \\ A_3 \end{bmatrix} \begin{bmatrix} \text{OETF}(E'_1/r(L)) \\ \text{OETF}(E'_2/r(L)) \\ \text{OETF}(E'_3/r(L)) \end{bmatrix} = \begin{bmatrix} A_2 \\ A_3 \end{bmatrix} \begin{bmatrix} \text{OETF}(E_1) \\ \text{OETF}(E_2) \\ \text{OETF}(E_3) \end{bmatrix} = \begin{bmatrix} A_2 \\ A_3 \end{bmatrix} \begin{bmatrix} F_1 \\ F_2 \\ F_3 \end{bmatrix} \quad (10)$$

Equation (10) provides

$$\begin{cases} F_2 = \vartheta_2 F_1 + L_2(C'_1, C'_2) \\ F_3 = \vartheta_3 F_1 + L_3(C'_1, C'_2) \end{cases}$$

where $\vartheta_i$ are constants depending on the matrix A and $L_i$ are linear functions also depending on the matrix A.

Then, equation (9) becomes:

$$Y = A_{11}\text{EOTF}(F_1) + A_{12}\text{EOTF}(F_2) + A_{13}\text{EOTF}(F_3) \quad (11)$$

and then

$$Y = A_{11}\text{EOTF}(F_1) + A_{12}\text{EOTF}(\vartheta_2 F_1 + L_2(C'_1, C'_2)) +$$

$$A_{13}\text{EOTF}(\vartheta_3 F_1 + L_3(C'_1, C'_2)) \quad (12)$$

When the OETF fulfills the commutation conditions, according to a second embodiment of the step 230, illustrated in **Fig. 4b,** in step 232, two intermediate components C'1 and C'2 are obtained by scaling the two chrominance components C1 and C2 by the factor OEFT(r(L(i))) where OETF is the function used in step 171 in **Fig. 2:**

$$C'1(i) = \frac{C1(i)}{OETF(r(L(i)))}$$

$$C'2(i) = \frac{C2(i)}{OETF(r(L(i)))}$$

where $r(L(i))$ is the factor given by step 160 that depends on the value of a pixel **i** of the component L (output of step 210), $C'_1(i), C'_2(i)$ is respectively the value of the pixel **i** of the component C'1 and C'2, $C_1$ (i), $C_2$ (i) is respectively the value of the pixel **i** of the component C1 and C2.

In step 231, a module ILEC obtains the three color components Ec from the first component Y and the two intermediate chrominance components C'1, C'2 as above explained.

According to a variant of this second embodiment, the OEFT is a square root function and the EOTF is then a square function. Then, in step 232 in **Fig. 4b,** the two intermediate components C'1 and C'2 are obtained by scaling the two chrominance components C1 and C2 by the factor $\sqrt{r(L(i))}$

$$C'1(i) = \frac{C1(i)}{\text{OETF}(r(L(i)))} = \frac{C1(i)}{\sqrt{r(L(i))}}$$

$$C'2(i) = \frac{C2(i)}{\text{OETF}(r(L(i)))} = \frac{C2(i)}{\sqrt{r(L(i))}}$$

Equation(9) becomes:

$$Y = A_1 \begin{bmatrix} E_1 \\ E_2 \\ E_3 \end{bmatrix} = A_1 \begin{bmatrix} F_1^2 \\ F_2^2 \\ F_3^2 \end{bmatrix} \qquad (11)$$

and

$$\begin{bmatrix} C'_1 \\ C'_2 \end{bmatrix} = \begin{bmatrix} C_1 \\ C_2 \end{bmatrix} / \sqrt{r(L)} = \begin{bmatrix} A_2 \\ A_3 \end{bmatrix} \begin{bmatrix} D_1 \\ D_2 \\ D_3 \end{bmatrix} / \sqrt{r(L)} = \begin{bmatrix} A_2 \\ A_3 \end{bmatrix} \begin{bmatrix} \sqrt{E'_1} \\ \sqrt{E'_2} \\ \sqrt{E'_3} \end{bmatrix} / \sqrt{r(L)}$$

such that the commutation provides

$$\begin{bmatrix} C'_1 \\ C'_2 \end{bmatrix} = \begin{bmatrix} A_2 \\ A_3 \end{bmatrix} \begin{bmatrix} \sqrt{E'_1/r(L)} \\ \sqrt{E'_2/r(L)} \\ \sqrt{E'_2/r(L)} \end{bmatrix} = \begin{bmatrix} A_2 \\ A_3 \end{bmatrix} \begin{bmatrix} \sqrt{E_1} \\ \sqrt{E_2} \\ \sqrt{E_3} \end{bmatrix} = \begin{bmatrix} A_2 \\ A_3 \end{bmatrix} \begin{bmatrix} F_1 \\ F_2 \\ F_3 \end{bmatrix} \qquad (12)$$

Equation (11) becomes:

$$Y = A_{11}F_1^2 + A_{12}F_2^2 + A_{13}F_3^2 \qquad (13)$$

and

$$Y = A_{11}F_1^2 + A_{12}\left(\vartheta_2 F_1 + L_2(C'_1, C'_2)\right)^2 + A_{13}\left(\vartheta_3 F_1 + L_3(C'_1, C'_2)\right)^2$$

$$(14)$$

Equation (14) is a second order equation that may be solved analytically. This analytic solution leads to a specific embodiment of the step 231 as illustrated in **Fig. 5.** This embodiment is advantageous because it allows an analytic expression of the EOTF (inverse of the OETF), and thus of the decoded components of the picture. Moreover, the EOTF is then the square function that is a low complexity process at the decoding side.

In step 2310, a module SM obtains a second component S by combining together the two intermediate chrominance components C'1, C'2 and the first component Y:

$$S = \sqrt{Y + k_0 C'^2_1 + k_1 C'^2_2 + k_2 C'_1 \, C'_2}$$

where $k_0$, $k_1$ and $k_2$ parameters values and $C'^2_c$ means the square of a component $C'_c$ (c=1 or 2).

In step 2311, a module LC2 obtains the three solver components Fc by linearly combining together the intermediate chrominance component C'1, C'2 and a second component S:

$$\begin{bmatrix} F_1 \\ F_2 \\ F_3 \end{bmatrix} = C \begin{bmatrix} S \\ C'_1 \\ C'_2 \end{bmatrix}$$

where C is a 3x3 matrix defined as the inverse of the matrix A.

In step 2312, the three color components Ec are obtained by taking the square of each intermediate color components (Dc):

$$\begin{bmatrix} E_1 \\ E_2 \\ E_3 \end{bmatrix} = \begin{bmatrix} \text{EOTF}(F_1) \\ \text{EOTF}(F_2) \\ \text{EOTF}(F_3) \end{bmatrix} = \begin{bmatrix} (F_1)^2 \\ (F_2)^2 \\ (F_3)^2 \end{bmatrix}$$

The matrix A determines the transform of the picture I to be encoded from the color space (E1, E2, E3), in which the pixel values of the picture to be encoded are represented, to the color space (Y, C1, C2).

Such a matrix depends on the gamut of the color picture to be encoded.

For example, when the picture to be encoded is represented in the BT709 gamut as defined by ITU-R Rec. 709, the matrix A is given by:

$$A = \begin{bmatrix} 0.2126 & 0.7152 & 0.0722 \\ -0.1146 & -0.3854 & 0.5 \\ 0.5 & -0.4541 & 0.0459 \end{bmatrix}$$

and the matrix C is given by:

$$C = \begin{bmatrix} 1 & 0 & 1.5748 \\ 1 & -0.1874 & -0.4681 \\ 1 & 1.8556 & 0 \end{bmatrix}$$

According to a variant of this second embodiment, the OEFT is a cubic root function and the EOTF is then a cubic function. Then, in step 232 in **Fig. 4b,** the two intermediate components C'1 and C'2 may then be obtained by scaling the two chrominance components C1 and C2 by the factor $\sqrt[3]{\text{r(L(i))}}$:

$$C'1(i) = \frac{C1(i)}{\sqrt[3]{\text{r(L(i))}}}$$

$$C'2(i) = \frac{C2(i)}{\sqrt[3]{\mathrm{r}(\mathrm{L(i)}):}}$$

The EOTF is then a cubic function thus leading to an equation (14) on $F_1$ being a more complex third order equation which can be solved analytically by the so-called Cardano's method.

Very complex analytic solutions also exist for the fourth order equation (Ferrari's method), but not anymore for any order higher or equal to five as stated by the Abel-Ruffini theorem.

The decoder DEC is configured to decode data which have been encoded by the encoder ENC.

The encoder ENC (and decoder DEC) is not limited to a specific encoder (decoder) but when an entropy encoder (decoder) is required, an entropy encoder such as a Huffmann coder, an arithmetic coder or a context adaptive coder like Cabac used in H264/AVC or HEVC is advantageous.

The encoders ENC (and decoder DEC) is not limited to a specific encoder which may be, for example, an frame/video legacy coder with loss like JPEG, JPEG2000, MPEG2, H264/AVC or HEVC.

On **Fig. 1-5,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the disclosure are implemented using either pure hardware, for example using dedicated hardware such ASIC or FPGA or VLSI, respectively «Application Specific Integrated Circuit », « Field-Programmable Gate Array », « Very Large Scale Integration », or from several integrated electronic components embedded in a device or from a blend of hardware and software components.

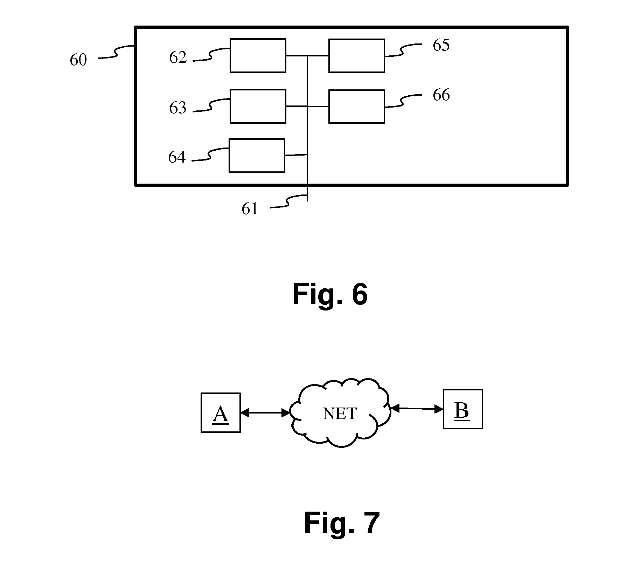

**Fig. 6** represents an exemplary architecture of a device 60 which may be configured to implement a method described in relation with **Fig. 1-5.**

Device 60 comprises following elements that are linked together by a data and address bus 61:

- a microprocessor 62 (or CPU), which is, for example, a DSP (or Digital Signal Processor);
- a ROM (or Read Only Memory) 63;
- a RAM (or Random Access Memory) 64;
- an I/O interface -5 for transmission and/or reception of data, from an application; and
- a battery -6

According to a variant, the battery 66 is external to the device. Each of these elements of **Fig. 6** are well-known by those skilled in the art and won't be disclosed further. In each of mentioned memory, the word « register » used in the specification can correspond to area of small capacity (some bits) or to very large area (e.g. a whole program or large amount of received or decoded data). ROM -3 comprises at least a program and parameters. Algorithm of the methods according to the disclosure is stored in the ROM 63. When switched on, the CPU 62 uploads the program in the RAM and executes the corresponding instructions.

RAM 64 comprises, in a register, the program executed by the CPU 62 and uploaded after switch on of the device 60, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific embodiment of encoding or encoder, the color picture I is obtained from a source. For example, the source belongs to a set comprising:

- a local memory (63 or -4), e.g. a video memory or a RAM (or Random Access Memory), a flash memory, a ROM (or Read Only Memory), a hard disk ;
- a storage interface, e.g. an interface with a mass storage, a RAM, a flash memory, a ROM, an optical disc or a magnetic support;
- a communication interface (65), e.g. a wireline interface (for example a bus interface, a wide area network interface, a local area network interface) or a wireless interface (such as a IEEE 802.11 interface or a Bluetooth® interface); and

- a picture capturing circuit (e.g. a sensor such as, for example, a CCD (or Charge-Coupled Device) or CMOS (or Complementary Metal-Oxide-Semiconductor)).

According to different embodiments of the decoding or decoder, the decoded picture or color component Ec is (are) sent to a destination; specifically, the destination belongs to a set comprising:

- a local memory (63 or 64), e.g. a video memory or a RAM (or Random Access Memory), a flash memory, a ROM (or Read Only Memory), a hard disk ;
- a storage interface, e.g. an interface with a mass storage, a RAM, a flash memory, a ROM, an optical disc or a magnetic support;
- a communication interface (65), e.g. a wireline interface (for example a bus interface, a wide area network interface, a local area network interface) or a wireless interface (such as a IEEE 802.11 interface or a Bluetooth® interface); and
- a display.

According to different embodiments of encoding or encoder, the bitstream BF and/or F are sent to a destination. As an example, one of bitstream F and BF or both bitstreams F and BF are stored in a local or remote memory, e.g. a video memory (64) or a RAM (64), a hard disk (63). In a variant, one or both bitstreams are sent to a storage interface, e.g. an interface with a mass storage, a flash memory, ROM, an optical disc or a magnetic support and/or transmitted over a communication interface (65), e.g. an interface to a point to point link, a communication bus, a point to multipoint link or a broadcast network.

According to different embodiments of decoding or decoder, the bitstream BF and/or F is obtained from a source. Exemplarily, the bitstream is read from a local memory, e.g. a video memory (64), a RAM (64), a ROM (63), a flash memory (63) or a hard disk (63). In a variant, the bitstream is received from a storage interface, e.g. an interface with a mass storage, a RAM, a ROM, a flash memory, an optical disc or a magnetic support and/or received from a communication interface (65), e.g. an interface to a point to point link, a bus, a point to multipoint link or a broadcast network.

According to different embodiments, device 60 being configured to implement an encoding method described in relation with **Fig. 1-3,** belongs to a set comprising:

- a mobile device ;
- a communication device ;
- a game device ;
- a tablet (or tablet computer) ;
- a laptop ;
- a still picture camera;
- a video camera ;
- an encoding chip;
- a still picture server; and
- a video server (e.g. a broadcast server, a video-on-demand server or a web server).

According to different embodiments, device 60 being configured to implement a decoding method described in relation with **Fig. 4, 4a, 4b** and **5,** belongs to a set comprising:

- a mobile device ;
- a communication device ;
- a game device ;
- a set top box;
- a TV set;
- a tablet (or tablet computer) ;
- a laptop ;
- a display and
- a decoding chip.

According to an embodiment illustrated in **Fig. 7,** in a transmission context between two remote devices A and B over a communication network NET, the device A comprises means which are configured to implement a method for encoding an picture as described in relation with the **Fig. 1-3** and the device B comprises means which are configured to implement a method for decoding as described in relation with **Fig. 4, 4a, 4b** and **5.**

According to a variant of the disclosure, the network is a broadcast network, adapted to broadcast still pictures or video pictures from device A to decoding devices including the device B.

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and any other device for processing a picture or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of encoding a color picture having color components (Ec), **characterized in that** it comprises:

   - obtaining (130) a luminance component (L) by applying a non-linear function, that depends on a modulation value obtained from the luminance (Y) of the color picture, on the luminance (Y) of the color picture, in order that the dynamic of said luminance component (L) is reduced compared to the dynamic of the luminance (Y) of the color picture;
   - obtaining two chrominance components (C1, C2) by:

      - obtaining (150) at least one intermediate color component (E'c) by scaling each color component (Ec) by a factor (r(L)) that depends on the luminance component (L); and
      - obtaining (170) said two chrominance components (C1, C2) from said at least one intermediate color components (E'c); and

- encoding (180) said luminance (L) and two chrominance components (C1, C2).

2. The method of claim 1, wherein the luminance (Y) of the color picture is divided by the modulation value (Ba) before applying the non-linear function to the luminance (Y) of the color picture.

3. The method of claim 1 or 2, wherein the non-linear function is either a gamma curve or a Slog curve.

4. The method of any preceding claim, wherein the factor (r(L)) is a ratio of the luminance component (L) over the luminance (Y) of the color picture.

5. The method of any preceding claim, wherein obtaining (170) said two chrominance components (C1, C2) from said at least one intermediate color components (E'c) by:

   - obtaining (171) three intermediate components (Dc) by taking the square-root of each intermediate color component (E'c); and
   - linearly combining (172) together the three intermediate components (Dc).

6. A method of decoding a color picture from a bitstream, **characterized in that** it comprises:

   - obtaining (220) a first component (Y) by applying a non-linear function on a luminance component (L), obtained (210) from the bitstream, in order that the dynamic of said first component (Y) is increased compared to the dynamic of the luminance component (L);
   - obtaining (230) at least one color component (Ec) from said first component (Y), two chrominance component (C1, C2) obtained from the bitstream and from a factor (r(L)) that depends on the luminance component (L); and
   - forming a decoded picture by combining together said at least one color component (Ec).

7. The method of claim 6, wherein the obtaining at least one color component (Ec) comprises:

   - obtaining (231) three intermediate color components (E'c) from said first component (Y) and the two chrominance components (C1, C2); and
   - obtaining (232) said at least color component (Ec) by scaling each intermediate color component (E'c) by the factor (r(L)).

8. The method of claim 6, wherein the obtaining at least one color component (Ec) comprises:

   - obtaining (232) two intermediate chrominance component (C'1, C'2) by scaling each chrominance component (C1, C2) according to the factor; and
   - obtaining (231) said at least one color components (Ec) from said first component (Y) and said two intermediate chrominance components (C'1, C'2);

9. The method of claim 8, wherein the obtaining at least one color component (Ec) comprises:

   - obtaining (232) two intermediate chrominance component (C'1, C'2) by scaling each chrominance component (C1, C2) by a value equals to the square root of the factor; and
   - obtaining (231) said at least one color components (Ec) by:

     - obtaining (2310) a second component (S) by combining together the two intermediate chrominance components (C'1, C'2) and the first component (Y);
     - obtaining (2311) at least one intermediate color components (Dc) by linearly combining together the intermediate chrominance component (C'1, C'2) and said second component (S); and

     - obtaining (2312) the three color components (Ec) by taking the square of each intermediate color components (Dc).

10. The method of one of the claims 6-9, wherein the luminance component (L) is multiplied by the modulation value (Ba) after having applied the non-linear function to the luminance component (L).

11. The method of one of the claims 6-10, wherein the non-linear function is the inverse of either a gamma curve or a Slog curve.

12. The method of one of the claims 6-11, wherein the factor (r(L)) is a ratio of the luminance component (L) over the first component (Y).

13. A device of encoding a color picture having color components (Ec), **characterized in that** it comprises a processor configured to:

- obtains (130) a luminance component (L) by applying a non-linear function, that depends on a modulation value obtained from the luminance (Y) of the color picture, on the luminance (Y) of the color picture, in order that the dynamic of said luminance component (L) is reduced compared to the dynamic of the luminance (Y) of the color picture;
- obtains two chrominance components (C1, C2) by:

  - obtaining (150) at least one intermediate color component (E'c) by scaling each color component (Ec) by a factor (r(L)) that depends on the luminance component (L); and
  - obtaining (170) said two chrominance components (C1, C2) from said at least one intermediate color components (E'c); and

- encoding (190) said luminance (L) and two chrominance components (C1, C2).

14. A device of decoding a color picture from a bitstream, **characterized in that** it comprises a processor configured to:

- obtains (220) a first component (Y) by applying a non-linear function on a luminance component (L), obtained (210) from the bitstream, in order that the dynamic of said first component (Y) is increased compared to the dynamic of the luminance component (L);
- obtains (230) at least one color component (Ec) from said first component (Y), two chrominance component (C1, C2) obtained from the bitstream and from a factor (r(L)) that depends on the luminance component (L);

the decoded picture being obtained by combining together said at least one color component (Ec).

15. A computer program product comprising program code instructions to execute the steps of the encoding method according to claim 1 when this program is executed on a computer.

16. A computer program product comprising program code instructions to execute the steps of the decoding method according to claim 6 when this program is executed on a computer.

17. A processor readable medium having stored therein instructions for causing a processor to perform at least the steps of the encoding method according to claim 1.

18. A processor readable medium having stored therein instructions for causing a processor to perform at least the steps of the decoding method according to claim 6.

19. Non-transitory storage medium carrying instructions of program code for executing steps of the method according to one of claims 1 to 12, when said program is executed on a computing device

Inf, a,b, c or γ

BF

120

BaM

Ba

BF

180

110

IC

Y

FM

L

130

160

RM

ENC

F

I

140

CC

Ec

E'c

LC

C1, C2

150

r(L)

170

**Fig. 1**

BF

Ba, Inf, a,b, c or γ

160

L

IFM

Y

RM

220

r(L)

210

DEC

C1, C2

ILC

Ec

F

230

**Fig. 4**

170

E'c → | *OETF* | Dc → | LC1 | → C1, C2

A

171    172

## Fig. 2

170

E'c → | √ | Dc → | LC1 | → C1, C2

A

171    172

## Fig. 3

230

Y                               r(L)

C1, C2 → [ILEC] →E'c→ ⊘ → Ec

231        232

**Fig. 4a**

230

OETF(r(L))              Y

C1, C2 → ⊘ →C'1, C'2→ [ILEC] → Ec

232                        231

**Fig. 4b**

231

Y → [SM] S

C'1, C'2 → [LC2] Fc → [( )²] → Ec

2310

2311      C      2312

**Fig. 5**

60

62

63

64

65

66

61

# Fig. 6

A ⟷ NET ⟷ B

# Fig. 7

Europäisches
Patentamt
European
Patent Office
Office européen
des brevets

# EUROPEAN SEARCH REPORT

Application Number

EP 15 30 5119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JI WON LEE ET AL: "Local tone mapping using K-means algorithm and automatic gamma setting", CONSUMER ELECTRONICS (ICCE), 2011 IEEE INTERNATIONAL CONFERENCE ON, IEEE, 9 January 2011 (2011-01-09), pages 807-808, XP031921523, DOI: 10.1109/ICCE.2011.5722876 ISBN: 978-1-4244-8711-0 * the whole document * | 1-19 | INV. H04N19/98 H04N19/36 H04N19/117 H04N19/136 H04N19/186 H04N19/80 |
| X | KWON HYUK-JU ET AL: "Compensation of de-saturation effect in HDR imaging using a real scene adaptation model", JOURNAL OF VISUAL COMMUNICATION AND IMAGE REPRESENTATION, ACADEMIC PRESS, INC, US, vol. 24, no. 6, 20 March 2012 (2012-03-20), pages 678-685, XP028583909, ISSN: 1047-3203, DOI: 10.1016/J.JVCIR.2012.03.001 | 1,6, 13-19 | |
| A | * the whole document * | 2-5,7-12 | TECHNICAL FIELDS SEARCHED (IPC) |
| X | TE-HSUN WANG ET AL: "Photography Enhancement Based on the Fusion of Tone and Color Mappings in Adaptive Local Region", IEEE TRANSACTIONS ON IMAGE PROCESSING, IEEE SERVICE CENTER, PISCATAWAY, NJ, US, vol. 19, no. 12, 1 December 2010 (2010-12-01), pages 3089-3105, XP011374140, ISSN: 1057-7149, DOI: 10.1109/TIP.2010.2052269 | 1,6, 13-19 | H04N |
| A | * the whole document * | 2-5,7-12 | |
| A | SID_JOURNALS, 1475 S. BASCOM AVE., STE. 114, CAMPBELL, CA 95008-4006 USA, 2006, XP040426453, * the whole document * | 1-19 | |

The present search report has been drawn up for all claims

| Place of search | Date of completion of the search | Examiner |
|---|---|---|
| Munich | 15 July 2015 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Rec. ITU-R BT.709-5,* April 2002
- *ITU-R BT.2020 OETF (Rec. ITU-R BT.2020-1,* June 2014
- High Efficiency Video Coding. *SERIES H: AUDIOVISUAL AND MULTIMEDIA SYSTEMS, Recommendation ITU-T H.265, Telecommunication Standardization Sector of ITU,* April 2013

- SMPTE standard: High Dynamic Range Electro-Optical Transfer Function of Mastering Reference Displays. *SMPTE ST 2084,* 2014